# EUROPÄISCHE PATENTANMELDUNG

(11) **EP 4 043 747 A1**
(43) Veröffentlichungstag der Anmeldung: **17.08.2022**
(21) Anmeldenummer: 22154401.8
(22) Anmeldetag: 01.02.2022
(51) Int. Cl.: F16C 29/10, F16L 3/18, F16C 41/04

(54) **SCHIEBEGLEITER**

(30) Priorität: 16.02.2021 DE 102021103614; 12.01.2022 DE 102022100584
(71) Anmelder: fischerwerke GmbH & Co. KG, 72178 Waldachtal (DE)
(72) Erfinder: Kosanke, Timo, 72250 Freudenstadt-Dietersweiler (DE); Wälder, Jonas, 71069 Sindelfingen (DE)
(74) Vertreter: Suchy, Ulrich Johannes

(57) **Zusammenfassung**

Die Erfindung betrifft einen Schiebegleiter (1) zur Kompensation thermisch bedingter Längenänderungen von Rohren. Der Schiebegleiter weist ein bezüglich einem Anbindungselement (2) verschiebliches Gleitelement (14) auf. Das Gleitelement weist Befestigungspunkte (16) zur Aufnahme einer nicht dargestellten Rohrschelle auf. Der Schiebegleiter ist erfindungsgemäß in einen Vormontagezustand bringbar, in welchem der Schiebegleiter unmittelbar an dem zu befestigbaren Untergrund festlegbar ist. Im Vormontagezustand sind das Gleitelement und das Anbindungselement zueinander verliersicher, was durch Anschlagelemente (13, 18) erreicht wird.

## Beschreibung

Die Erfindung betrifft einen Schiebegleiter mit den Merkmalen des Oberbegriffs des Anspruchs 1, sowie eine Befestigungsanordnung einer Rohrschelle an dem erfindungsgemäßen Schiebgleiter gemäß Anspruch 13, sowie eine Befestigungsanordnung eines erfindungsgemäßen Schiebegleiters an einer Montageschiene gemäß Anspruch 15. Ein derartiger Schiebegleiter ist aus der Gebrauchsmusteranmeldung DE8406915U bekannt. Die Gebrauchsmusteranmeldung beschreibt eine Vorrichtung, die aus zwei Teilen besteht. Ein Halter ist hierbei mit einem Untergrund, insbesondere einer Gebäudewand oder einer Decke, verbindbar und ein Schlitten, welcher einen Gleitschuh umfasst, ist bezüglich des Halters längsverschieblich. An dem Schlitten ist eine Rohrschelle anbringbar, welche dazu ausgelegt ist, ein Rohr aufzunehmen. Dadurch, dass der Schlitten und folglich auch die Rohrschelle bezüglich des Halters längsverschieblich sind, ist die Vorrichtung in der Lage, thermisch bedingte Längenänderungen des Rohrs auszugleichen. Längt sich das Rohr aufgrund von Erwärmung, bewegt sich der Schlitten bezüglich des Halters. Dadurch wird vermieden, dass auf das Rohr Längskräfte wirken, wodurch der Untergrund, oder das Rohr selbst, respektive die Befestigung zwischen Rohr und Untergrund, beschädigt werden könnte.

Nachteilig an der beschriebenen Lösung ist, dass eine Montage der Vorrichtung in mehreren Schritten erfolgen muss. Zuerst muss der Halter am Untergrund angebracht werden. Erst anschließend kann der Schlitten an dem Halter befestigt und verliersicher mit diesem verbunden werden.

Aufgabe der Erfindung ist es daher, einen Schiebegleiter, sowie zwei Befestigungsanordnungen mit einem solchen Schiebegleiter bereitzustellen, der bereits fertig montiert bereitgestellt werden kann und somit lediglich an dem zu befestigenden Untergrund anzubringen ist.

Diese Aufgaben werden erfindungsgemäß durch die Merkmale der Ansprüche 1, 13 und 15 gelöst. Die Erfindung schlägt einen Schiebegleiter zur Kompensation thermisch bedingter Längenänderungen von Rohren vor. Der erfindungsgemäße Schiebegleiter umfasst ein an einem Untergrund festlegbares Anbindungselement. Das Anbindungselement kann ein einteiliges Blechbiegeteil sein. Insbesondere weist das Anbindungselement eine plane Anlagefläche auf, welche in flächige Anlage zu dem Untergrund bringbar ist, an welchem der Schiebegleiter montiert werden soll. Das Anbindungselement ist vorzugsweise mehrteilig und umfasst weitere Blechbiegeteile. Blechbiegeteile sind günstig in der Fertigung und bieten eine hohe Variabilität in der Formgebung. Der Schiebegleiter erstreckt sich im Wesentlichen entlang einer Schiebeachse und weist ein bezüglich dem Anbindungselement entlang der Schiebeachse in einer Schiebeführung linear in zwei Richtungen verschiebliches Gleitelement auf. Die Bewegung des Gleitelements bezüglich des Anbindungselements ist auf die Schiebeachse begrenzt und die zwei Richtungen sind einander entgegen gerichtet. Vorzugsweise ist das Gleitelement ebenfalls ein Blechbiegeteil. Die Schiebeführung ist insbesondere dadurch gebildet, dass das Anbindungselement an gegenüberliegenden Seiten jeweils eine U-förmige Aufnahme aufweist, die sich in einem definierten Abstand voneinander parallel zur Schiebeachse erstrecken. Die Öffnungen der U-förmigen Aufnahmen sind einander zugewandt und insbesondere durch zweimaliges Abkanten der gegenüberliegenden Seiten des Anbindungselements hergestellt. Gegenüberliegende Seiten des sich in Richtung der Schiebeachse erstreckenden Gleitelements werden von der jeweiligen U-förmigen Aufnahme spielpassungsartig übergriffen, wodurch die Beweglichkeit des Gleitelements auf die Schiebeachse begrenzt ist.

Die Schiebeführung ist zwischen dem Anbindungselement und dem Gleitelement ausgebildet. Alternativ können die U-förmigen Aufnahmen am Gleitelement ausgebildet sein, so dass das Anbindungselement in den Aufnahmen liegt.

Das Gleitelement weist mindestens einen Befestigungspunkt zur Verbindung mit einer Rohrschelle auf. Dieser Befestigungspunkt ist insbesondere eine Gewindebuchse oder eine Hülse mit einem Gewinde, die an dem Gleitelement angeordnet ist, oder eine Gewindebohrung, die das Gleitelement zumindest teilweise durchdringt. Der mindestens eine Befestigungspunkt dient insbesondere der Aufnahme einer Gewindestange, an welcher eine Rohrschelle befestigt ist. Der Befestigungspunkt ist derart angeordnet, dass eine montierte Gewindestange im Wesentlichen orthogonal zu der Schiebeachse orientiert ist. Insbesondere sind mehrere Befestigungspunkte entlang einer gemeinsamen Geraden, die parallel zur Schiebeachse orientiert ist, auf dem Gleitelement angeordnet.

Kennzeichnend für die Erfindung ist, dass bereits in einem Vormontagezustand, in welchem der Schiebegleiter noch nicht an einem Untergrund festgelegt ist, Anschlagelemente die lineare Verschieblichkeit des Gleitelements bezüglich des Anbindungselements entlang der Schiebeachse begrenzen, wodurch das Gleitelement verliersicher am Anschlagelement gehalten ist. Im Vormontagezustand ist das Gleitelement verschieblich am Anschlagelement festgelegt und die Anschlagelemente begrenzen eine maximale Verschieblichkeit des Gleitelements entlang der Schiebachse. Der Schiebegleiter wird vor der Befestigung am Untergrund in den Vormontagezustand gebracht. Hierdurch kann der Schiebegleiter als Ganzes am Untergrund befestigt werden und es entfällt eine Montage der einzelnen Teile vor Ort, was zu einer erheblichen Zeitersparnis bei der Montage auf der Baustelle führt. Zudem ist es durch den Vormontagezustand möglich, den Schiebegleiter vor der Auslieferung einer Funktionsprüfung zu unterziehen. Hierdurch besteht nicht die Gefahr, dass ein Benutzer den Schiebegleiter unsachgemäß zusammenbaut, was zu einer Funktionsstörung des Schiebegleiters führen könnte.

In einer weiteren vorteilhaften Ausgestaltung der Erfindung weist das Anbindungselement zum Festlegen am Untergrund mindestens eine Durchgangsöffnung auf. Die Durchgangsöffnung kann im Bereich der Schiebeführung angeordnet sein und das Anbindungselement und/oder das Gleitelement durchdringen. Vorzugsweise ist die Durchgangsöffnung allerdings radial bezüglich der Schiebeachse außerhalb der Schiebeführung angeordnet. Die Durchgangsöffnung dient der Aufnahme eines Befestigungsmittels, insbesondere einer Schraube oder eines Ankers, welches in ein vorgefertigtes Bohrloch im Untergrund eingebracht wird, wodurch der Schiebegleiter am Untergrund kraftschlüssig festlegbar ist. Unter "außerhalb der Schiebeführung" ist zu verstehen, dass die Durchgangsöffnung insbesondere radial bezüglich der Schiebeachse außerhalb der U-förmigen Aufnahmen liegt, wodurch die Funktion des Schiebegleiters nicht durch das Befestigungsmittel beeinträchtigt wird. Vorzugsweise weist das Anbindungselement zwei Durchgangsöffnungen auf, die symmetrisch bezüglich des Gleitelements und insbesondere spiegelsymmetrisch zur Schiebeachse angeordnet sind. Beide Durchgangsöffnungen liegen hierbei außerhalb der U-förmigen Aufnahmen. Anders formuliert, sind die Durchgangsöffnungen "beidseitig" neben dem Gleitelement und in jeweils identischen Abständen zum Gleitelement angeordnet. Hierdurch ist der Schiebegleiter durch zwei Befestigungsmittel stabil am Untergrund festlegbar.

In einer weiteren vorteilhaften Ausgestaltung der Erfindung ist in der Schiebeführung zwischen dem Anbindungselement und dem Gleitelement ein Reibungsdämpfer angeordnet. Der Reibungsdämpfer kann hierbei fest mit dem Gleitelement oder dem Anbindungselement verbunden sein. Der Reibungsdämpfer sorgt dafür, dass das Gleitelement mit möglichst wenig Reibung bezüglich dem Anbindungselement gleiten kann, wodurch Verschleiß und Geräuschentwicklungen reduziert werden. Ohne das Gleitelement würde "Blech auf Blech" gleiten, was zu erhöhtem Verschleiß führen könnte. Der Reibungsdämpfer kann mehrteilig sein. Insbesondere ist der Reibungsdämpfer zweiteilig, wobei im Falle, dass der Reibungsdämpfer fest mit dem Anbindungselement verbunden ist, jeweils ein Teil in den U-förmigen Aufnahmen angeordnet ist. Insbesondere erstrecken sich die Teile jeweils über die komplette Länge der U-förmigen Aufnahmen entlang der Schiebeachse und weisen selbst eine U-förmige Gestalt auf. Insbesondere übergreifen, respektive umschließen, die Teile des Reibungsdämpfers in den U-förmigen Aufnahmen die gegenüberliegenden Seiten des Gleitelements jeweils vollständig. Dadurch kann der Schiebegleiter sowohl in einer Anordnung als Deckenabhängung, als auch in einer Bodenmontage verwendet werden. In der Deckenabhängung wirkt die Last auf die Schiebeführung des Schiebegleiters, insbesondere orthogonal zur Schiebeachse von dem Schiebegleiter weg, wohingegen in einer Standmontage die Last orthogonal in Richtung des Schiebegleiters auf die Schiebeführung einwirkt. In beiden Montagearten ist der Reibungsdämpfer wirksam. Die Teile des Reibungsdämpfers können in die U-förmigen Aufnahmen eingeklebt oder eingespritzt sein. Der Reibungsdämpfer, genauer formuliert die Teile des Reibungsdämpfers, können auch fest mit den gegenüberliegenden Seiten des Gleitelements verbunden sein. Insbesondere sind die Teile jedoch lediglich auf die Seiten aufgesteckt. Die aufgesteckten Teile werden insbesondere in Position gehalten, wenn sich das Gleitelement in den U-förmigen Aufnahmen befindet. Aufgesteckte Teile des Reibungsdämpfers erlauben ein relativ einfaches Austauschen des Reibungsdämpfers. Hierzu müssen das Gleitelement und das Anbindungselement lediglich außer Eingriff zueinander gebracht werden. Anschließend können die Teile des Reibungsdämpfers von den jeweiligen Seiten des Gleitelements abgezogen werden.

In einer weiteren vorteilhaften Ausgestaltung der Erfindung sind die Anschlagelemente durch zwei erste Anschlagelemente am Anbindungselement und zwei zweite Anschlagelemente am Gleitelement gebildet, wobei jeweils eines der ersten und eines der zweiten Anschlagelemente zusammenwirken. Die zwei ersten und die korrespondierenden zwei zweiten Anschlagelemente begrenzen gemeinsam die maximale Verschieblichkeit des Gleitelements bezüglich des Anbindungselements in beide Richtungen und sorgen dafür, dass beide Teile verliersicher aneinandergehalten sind. Die ersten und die zweiten Anschlagelemente ragen hierbei derart weit aufeinander zu, dass bei Erreichen der maximalen Verschieblichkeit in einer Richtung das jeweilige erste und das jeweilige korrespondierende zweite Anschlagelement aufeinandertreffen. Ein weiteres Verschieben des Gleitelements bezüglich des Anbindungselements über diesen Punkt hinaus ist nicht möglich. Durch die Abstände der beiden ersten und der beiden zweiten Anschlagelemente in Richtung der Schiebeachse ist die maximale Verschieblichkeit des Schiebegleiters einstellbar.

Da sowohl das Anbindungselement als auch das Gleitelement insbesondere als Blechbiegeteile ausgeführt sind, sind in einer weiteren vorteilhaften Ausgestaltung der Erfindung die ersten und die zwei zweiten Anschlagelemente durch Umformen, insbesondere durch Abkanten, hergestellt. Hierbei sind die ersten Anschlagelemente um insbesondere 90° bezüglich des Anbindungselements abgekantet und ragen in der Vormontageposition in Richtung des Gleitelements. Die zweiten Anschlagelemente am Gleitelement hingegen sind ebenfalls um insbesondere 90° bezüglich des Gleitelements abgekantet, ragen jedoch in Richtung des Anbindungselements.

Um eine möglichst große maximale Verschieblichkeit zu erreichen, sind in einer weiteren vorteilhaften Ausgestaltung der Erfindung die ersten und die jeweils korrespondierenden zweiten Anschlagelemente paarweise außerzentrisch zu der Schiebeachse, insbesondere jeweils auf einer Parallelen zu der Schiebeachse, angeordnet. Dadurch ist es möglich, dass die jeweiligen Stirnseiten des sich entlang der Schiebeachse erstreckenden Gleitelements über die jeweiligen Stirnseiten des Anbindungselements hinausragen können, und eine maximale Beweglichkeit somit nicht unmittelbar durch die Längserstreckung des Anbindungselements begrenzt ist. Das Gleitelement kann somit länger sein als das Anbindungselement. Durch die außerzentrische Anordnung der ersten und der zweiten Anschlagelemente zueinander entspricht die maximal mögliche Verschieblichkeit, also der maximal mögliche Verschiebeweg des Gleitelements bezüglich des Anbindungselements, im Wesentlichen der Summe der Abstände der beiden ersten Anschlagelemente und der beiden zweiten Anschlagelemente zueinander in Richtung der Schiebeachse.

In einer weiteren vorteilhaften Ausgestaltung der Erfindung umfasst das Anbindungselement eine Querstrebe, in welcher die mindestens eine Durchgangsöffnung, insbesondere beide Durchgangsöffnungen, angeordnet ist. Die Querstrebe weist zwei Verbindungslaschen auf, mit welcher die Querstrebe mit einem Grundkörper des Anbindungselements kraft- und/oder formschlüssig verbunden ist. Der Grundkörper weist insbesondere die plane Anlagefläche auf. Die Querstrebe erstreckt sich im Wesentlichen orthogonal zur Schiebeachse und ist in eine Ausnehmung des Grundkörpers des Anbindungselements eingesetzt. Die Breite der Ausnehmung in Richtung der Schiebeachse korrespondiert mit der Breite der Querstrebe, so dass diese formschlüssig in die Ausnehmung einsetzbar ist. Insbesondere ist die Querstrebe hierbei nur mit einem Mittelteil in die Ausnehmung eingesetzt, wohingegen die jeweiligen Außenseiten der Querstrebe über die jeweiligen U-förmigen Aufnahmen überstehen. Die Durchgangsöffnungen sind hierbei bevorzugt an den jeweiligen Außenseiten angeordnet. Am Mittelteil sind die Verbindungslaschen angeordnet, die einander abgewandt sind und die Ausnehmung durch Umformen, insbesondere Abkanten, übergreifen, wodurch die Querstrebe am Grundkörper festgelegt, also formschlüssig und/oder kraftschlüssig mit diesem verbunden ist. Insbesondere ist die Querstrebe hierbei derart tief in die Ausnehmung eingesetzt, dass bei Anlage des Schiebegleiters an oder auf den zu befestigenden Untergrund, lediglich der Grundkörper mit der planen Anlagefläche mit dem Untergrund flächig in Kontakt tritt und die Querstrebe insbesondere in einem Bereich zwischen 1 mm und 4 mm von dem Untergrund beabstandet ist. Anders formuliert, existiert zwischen der Anlagefläche des Grundkörpers und der Querstrebe ein Abstand zwischen insbesondere 1 mm bis 4 mm, der insbesondere der Blechdicke des Grundkörpers entspricht, wobei der Abstand orthogonal zur Schiebeachse und zur Anlagefläche des Grundkörpers ist. Dadurch ist bei der Montage des Schiebegleiters gewährleistet, dass der Grundkörper flächig am Untergrund anliegt und die Querstrebe den Grundkörper gegen den Untergrund verspannt. Hierbei kann insbesondere die Querstrebe zumindest geringfügig in Richtung des Untergrunds federn, wenn durch Befestigungsmittel, die in die Durchgangsöffnungen eingebracht sind, der Grundkörper gegen den Untergrund verspannt wird. Ein weiterer Vorteil der kraft- und/oder formschlüssigen Verbindung der Querstrebe mit dem Grundkörper liegt darin, dass die Querstrebe nicht stoffschlüssig mit dem Grundkörper verbunden werden muss. Eine solche stoffschlüssige Verbindung ist beispielsweise eine aus dem Stand der Technik bei derartigen Schiebegleitern bekannte Schweißverbindung. Eine Verbindung durch Schweißen führt jedoch zu einem erheblichen Wärmeeintrag in den Grundkörper, wodurch der Reibungsdämpfer beschädigt werden kann. Daher müsste die Schweißung der Verbindung zuerst erfolgen, vor der Montage des Reibungsdämpfers. Ebenfalls wäre es möglich, die stoffschlüssige Verbindung zwischen Querstrebe und Grundkörper durch Kleben zu realisieren. Eine solche Klebeverbindung ist jedoch zumeist nur begrenzt belastbar und insbesondere im Brandfall nicht beständig.

In einer weiteren vorteilhaften Ausgestaltung der Erfindung weisen die Verbindungslaschen eine Strukturierung auf, die in den Grundkörper des Anbindungselements eingepresst ist. Hierdurch ist ein fester Sitz der Querstrebe am Grundkörper gewährleistet.

In einer erfindungsgemäßen Befestigungsanordnung ist eine Rohrschelle mit dem erfindungsgemäßen Schiebegleiter verbunden. Die Rohrschelle ist hierbei mit dem Befestigungspunkt des Gleitelements, insbesondere der Gewindebuchse, verbunden. Besonders bevorzugt ist die Rohrschelle über eine Gewindestange mit dem Befestigungspunkt verbunden. Hierbei ist ein Ende der Gewindestange mit dem Befestigungspunkt verbunden, insbesondere in die Gewindebuchse eingeschraubt. Das andere Ende der Gewindestange ist mit der Rohrschelle verbunden. Insbesondere weist hierbei die zu befestigende Rohrschelle eine mit der Gewindestange korrespondierende Aufnahme, insbesondere eine Gewindemutter, auf.

Der Schiebegleiter kann auch mit einer Montageschiene verbunden sein. Insbesondere sind hierfür Hammerkopfelemente vorgesehen, die in einen Aufnahmeraum der Montageschiene eingebracht sind. Die Hammerkopfelemente können ortsfest in dem Aufnahmeraum festlegbar oder bezüglich des Aufnahmeraums entlang einer Längserstreckung der Schiene beweglich ausgebildet sein. Entsprechend ist der Schiebegleiter selbst bezüglich der Schiene ortsfest oder aber in Längsrichtung der Schiene verschieblich mit der Schiene verbunden. Bevorzugt ist der Schiebegleiter über das Anbindungselement mit der Montageschiene, insbesondere durch Hammerkopfelemente, verbunden. Hierzu kann das Anbindungselement eine Querstrebe mit Durchgangslöchern aufweisen. Hammerkopfelemente sind hierbei für die Befestigung nur beispielhaft angeführt. Andere in einer Montageschiene festlegbaren Elemente können ebenfalls zur Befestigung dienen. Zudem kann der Schiebegleiter mit einer sogenannten Ankerschiene verbunden werden, also einer Schiene, die zum Eingießen in Beton vorgesehen ist.

Der Schiebegleiter kann zur Verbindung gleichzeitig mit einer Rohrschelle, einer Montageschiene und/oder einer Ankerschiene verbunden sein.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden.

Die Erfindung wird nachfolgend anhand eines Ausführungsbeispiels erklärt.

Es zeigen:
- Figur 1: einen erfindungsgemäßen perspektivisch dargestellten Schiebegleiter in einem Vormontagezustand;
- Figur 2: den erfindungsgemäßen Schiebegleiter aus Figur 1 in einem Zustand vor dem Zusammenbau von Gleitelement und Anbindungselement in einer perspektivischen Darstellung; und
- Figur 3: den Schiebegleiter aus Figur 1 in einer Vorderansicht;

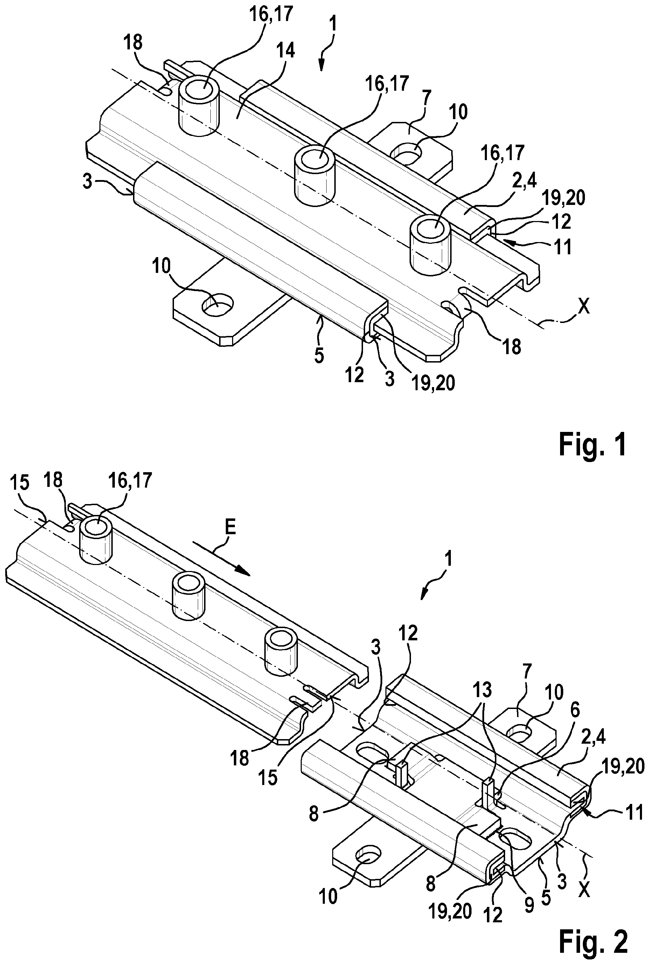

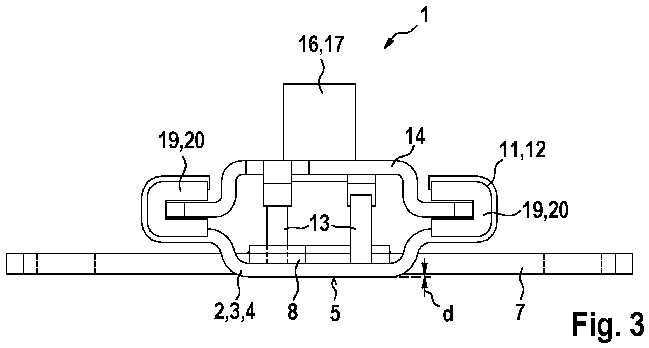

Figur 1 zeigt einen erfindungsgemäßen Schiebegleiter 1 in einem Vormontagezustand. Im Vormontagezustand ist der dargestellte Schiebegleiter 1 einsatzbereit und an einem Untergrund montierbar (nicht dargestellt). Der Schiebegleiter 1 weist ein Anbindungselement 2 auf, welches im Detail in Figur 2 dargestellt ist. Das Anbindungselement 2 erstreckt sich entlang einer Schiebeachse X des Schiebegleiters 1 zwischen zwei Stirnseiten 3. Das Anbindungselement 2 weist einen Grundkörper 4 auf, welcher ein Blechbiegeteil ist. Der Grundkörper 4 weist eine plane Anlagefläche 5 auf, mit welcher der Schiebegleiter 1 mit dem Untergrund in Kontakt bringbar ist. Der Grundkörper 4 weist mittig eine Ausnehmung 6 auf, in welcher eine Querstrebe 7 angeordnet ist. Die Querstrebe 7 ist ebenfalls ein Blechbiegeteil und erstreckt sich im Wesentlichen orthogonal zur Schiebeachse X. Die Querstrebe 7 weist zwei Verbindungslaschen 8 auf, die die Ausnehmung 6 in Richtung der Schiebeachse X übergreifen. Hierzu wird die Querstrebe 7 von "unten" in die Ausnehmung 6 eingebracht und anschließend werden die Verbindungslaschen 8 abgekantet, bis sich diese im Wesentlichen parallel zur Anlagefläche 5 erstrecken. Die Verbindungslaschen 8 weisen jeweils eine Strukturierung 9 auf, die hierbei in den Grundkörper 4 eingepresst werden. Durch das Abkanten der Verbindungslaschen 8 und durch die Strukturierung 9 ist die Querstrebe 7 fest mit dem Grundkörper 4 verbunden. Die Querstrebe 7 weist zwei Durchgangsöffnungen 10 auf, die außerhalb des Grundkörpers 4 angeordnet sind. Durch die Durchgangsöffnungen 10 sind Befestigungselemente B einbringbar, mittels welchen der Grundkörper 2 und somit der Schiebegleiter 1 selbst am Untergrund festlegbar ist (nicht dargestellt). Wie in Figur 3 dargestellt, existiert zwischen der Anlagefläche 5 und der Querstrebe 7 ein Abstand d. Dadurch tritt bei Anlage des Schiebegleiters 1 an den Untergrund zumindest zuerst die Anlagefläche 5 mit dem Untergrund in Kontakt. Wird durch das Einbringen von Befestigungselementen B in die Durchgangsöffnungen 10 der Querstrebe 7 der Schiebegleiter 1 am Untergrund festgelegt, wird durch den Abstand d die Anlagefläche 5 gegen den Untergrund verspannt und eine stabile und wackelfreie Montage des Schiebegleiters 1 ist gewährleistet.

Das Anbindungselement 2 weist eine Schiebeführung 11 auf. Diese ist durch zwei U-förmige Aufnahmen 12 gebildet, wobei sich die U-förmigen Aufnahmen 12 parallel zur Schiebeachse X erstrecken, und wobei die jeweiligen Öffnungen der U-förmigen Aufnahmen 12 einander zugewandt sind. Die U-förmigen Aufnahmen 12 sind durch Abkanten der jeweiligen Seiten des Grundkörpers 4 hergestellt. Zapfenartige erste Anschlagelemente 13 sind durch Abkanten des Grundkörpers 4 hergestellt. Die zwei ersten Anschlagelemente 13 sind hierbei orthogonal zur Anlagefläche 5 orientiert und, wie in Figur 2 dargestellt, zueinander versetzt und somit außermittig bezüglich der Schiebeachse X angeordnet. In die Schiebeführung 11 ist ein Gleitelement 14 einschiebbar. Das Gleitelement 14 ist ebenfalls ein Blechbiegeteil und erstreckt sich entlang der Schiebeachse X zwischen zwei Stirnseiten 15. Die Breite des Gleitelements 14, also seine Ausdehnung orthogonal zur Schiebeachse X, korrespondiert hierbei mit dem Abstand, den die beiden U-förmigen Aufnahmen 12 zueinander aufweisen. Dadurch ist das Gleitelement 14 passungsartig in Einführrichtung E in die U-förmigen Aufnahmen 12 einführbar, wie dies in Figur 2 dargestellt ist. Das Gleitelement 14 weist drei Befestigungspunkte 16 auf, die als Gewindebuchsen 17 ausgeführt sind, welche dazu dienen, eine Gewindestange zur Befestigung einer Rohrschelle aufzunehmen (nicht dargestellt). Die Gewindebuchsen 17 sind auf einer gemeinsamen Geraden angeordnet, die parallel zur Schiebeachse X orientiert ist.

Wie in den Figuren 1 und 3 zu sehen ist, weist das Gleitelement 14 zwei zapfenartige zweite Anschlagelemente 18 auf, die ebenfalls durch Abkanten hergestellt sind. Die zweiten Anschlagelemente 18 sind jeweils an den Stirnseiten 15 angeordnet und so abgekantet, dass sie von den Gewindebuchsen 17 weg weisen. Wie insbesondere in Figur 3 ersichtlich ist, sind auch die zweiten Anschlagelemente 18 zueinander versetzt und außermittig bezüglich der Schiebeachse X angeordnet. Jeweils eines der ersten und eines der zweiten Anschlagelemente 13, 18 korrespondieren hierbei miteinander. Durch die spezielle Anordnung der ersten und der zweiten Anschlagelemente 13, 18 zueinander ist eine Verschiebeweg des Gleitelements 14 bezüglich des Anbindungselements 2 maximiert. Um den Schiebegleiter 1 in den Vormontagezustand zu bringen, in welchem das Gleitelement 14 verliersicher am Anbindungselement 2 gehalten ist, wird, wie in Figur 2 dargestellt, das Gleitelement 14 in Einführrichtung E in die Schiebeführung 11 eingesteckt. Dadurch, dass das in Einführrichtung E vordere zweite Anschlagelement 18 noch nicht abgekantet ist, ist kann das vordere zweite Anschlagelement 18 das linke erste Anschlagelement 13 "übergleiten". Ist das Gleitelement 14 wie vorgesehen in der Schiebeführung 11 angeordnet, wird das zweite Anschlagelement 18 abgekantet, wodurch die Verliersicherung realisiert ist.

Ein Reibungsdämpfer 19 ist am Anbindungselement 2 angeordnet. Dieser sorgt dafür, dass das Gleitelement 14 mit möglichst geringen Kräften in der Schiebeführung 11 gleiten kann. Der Reibungsdämpfer 19 ist zweiteilig ausgestaltet wobei jeweils ein Teil 20 in einer der U-förmigen Aufnahmen 12 angeordnet ist. Die Teile 20 erstrecken sich parallel zur Schiebeachse X und zwischen den Stirnseiten 3 des Anbindungselements 2. Die Teile 20 sind mit den jeweiligen U-förmigen Aufnahmen 12 hierbei fest verbunden.

### Bezugszeichenliste

### Schiebegleiter

- 1: Schiebegleiter
- 2: Anbindungselement
- 3: Stirnseite des Anbindungselements 2
- 4: Grundkörper des Anbindungselements 2
- 5: Anlagefläche
- 6: Ausnehmung im Grundkörper 4
- 7: Querstrebe des Anbindungselements 2
- 8: Verbindungslaschen der Querstrebe 7
- 9: Strukturierung
- 10: Durchgangsöffnung
- 11: Schiebeführung
- 12: U-förmige Aufnahme
- 13: erstes Anschlagelement
- 14: Gleitelement
- 15: Stirnseite des Gleitelements 14
- 16: Befestigungspunkt
- 17: Gewindebuchse
- 18: zweites Anschlagelement
- 19: Reibungsdämpfer
- 20: Teil des Reibungsdämpfers 19
- X: Schiebeachse
- E: Einführrichtung
- B: Befestigungselement
- d: Abstand

## Patentansprüche

1. Schiebegleiter (1) zur Kompensation thermisch bedingter Längenänderungen von Rohren, umfassend ein an einem Untergrund festlegbares Anbindungselement (2), ein bezüglich dem Anbindungselement (2) entlang einer Schiebeachse (X) einer Schiebeführung (11) linear verschiebliches Gleitelement (14), wobei das Gleitelement (14) mindestens einen Befestigungspunkt (16) zur Verbindung mit einer Rohrschelle umfasst, wobei die Schiebeführung (11) zwischen dem Anbindungselement (2) und dem Gleitelement (14) ausgebildet ist,
**dadurch gekennzeichnet, dass** in einem Vormontagezustand, in welchem der Schiebegleiter (1) noch nicht an einem Untergrund festgelegt ist, Anschlagelemente (13, 18) die lineare Verschieblichkeit des Gleitelements (14) bezüglich des Anbindungselements (2) entlang der Schiebeachse (X) begrenzen, wodurch das Gleitelement (14) verliersicher am Anbindungselement (2) gehalten ist.

2. Schiebegleiter (1) nach Anspruch 1, **dadurch gekennzeichnet, dass** das Anbindungselement (2) mehrteilig ist und Blechbiegeteile umfasst.

3. Schiebegleiter (1) nach Anspruch 1 oder 2, **dadurch gekennzeichnet, dass** das Anbindungselement (2) zum Festlegen am Untergrund mindestens eine Durchgangsöffnung (10) aufweist, die radial bezüglich der Schieberachse (X) außerhalb der Schiebeführung (11) angeordnet ist.

4. Schiebegleiter (1) nach Anspruch 3, **dadurch gekennzeichnet, dass** das Anbindungselement (2) zwei Durchgangsöffnungen (10) aufweist, die symmetrisch bezüglich des Gleitelements (14) angeordnet sind, insbesondere spiegelsymmetrisch zu der Schiebeachse (X).

5. Schiebegleiter (1) nach einem der vorhergehenden Ansprüche, **dadurch gekennzeichnet, dass** in der Schiebeführung (11) zwischen dem Anbindungselement (2) und dem Gleitelement (14) ein Reibungsdämpfer (19) angeordnet ist.

6. Schiebegleiter (1) nach einem der vorhergehenden Ansprüche, **dadurch gekennzeichnet, dass** das Gleitelement (14) ein Blechbiegeteil ist.

7. Schiebegleiter (1) nach einem der vorhergehenden Ansprüche, **dadurch gekennzeichnet, dass** die Anschlagelemente (13, 18) durch zwei erste Anschlagelemente (13) am Anbindungselement (2) und zwei zweite Anschlagelemente (18) am Gleitelement (14) gebildet sind, wobei jeweils eines der ersten und eines der zweiten Gleitelemente (13, 18) zusammenwirkend miteinander korrespondieren.

8. Schiebegleiter (1) nach Anspruch 7 **dadurch gekennzeichnet, dass** die ersten und die zweiten Anschlagelemente (13, 18) durch Umformen, insbesondere Abkanten, hergestellt sind.

9. Schiebegleiter (1) nach Anspruch 7 oder 8, **dadurch gekennzeichnet, dass** die ersten und die jeweils korrespondierenden zweiten Anschlagelemente (13, 18) paarweise außerzentrisch zu der Schiebeachse (X), insbesondere jeweils auf einer Parallelen zu der Schiebeachse (X), angeordnet sind.

10. Schiebegleiter (1) nach einem der Ansprüche 3 bis 9, **dadurch gekennzeichnet, dass** das Anbindungselement (2) eine Querstrebe (7) umfasst, in welcher die mindestens eine Durchgangsöffnung (10) angeordnet ist und dass die Querstrebe (7) zwei Verbindungslaschen (8) aufweist, mit welcher die Querstrebe (7) mit einem Grundkörper (4) des Anbindungselements (2) kraft- und/oder formschlüssig verbunden ist.

11. Schiebegleiter (1) nach Anspruch 10, **dadurch gekennzeichnet, dass** die Verbindungslaschen (8) eine Strukturierung (9) aufweisen, die in den Grundkörper (4) des Anbindungselements (2) eingepresst sind.

12. Schiebegleiter (1) nach Anspruch 10 oder 11, **dadurch gekennzeichnet, dass** die Querstrebe (7) derart tief in eine Ausnehmung (6) im Grundkörper (4) eingesetzt ist, dass ein Abstand (d) zwischen einer Anlagefläche (5) des Grundkörpers (4) und der Querstrebe (7) besteht, wobei der Abstand (d) orthogonal zur Schiebeachse (X) und zur Anlagefläche (5) ist.

13. Befestigungsanordnung einer Rohrschelle an einem Schiebegleiter (1) nach einem der vorhergehenden Ansprüche, wobei die Rohrschelle mit dem Befestigungspunkt (16) des Gleitelements (14) verbunden ist.

14. Befestigungsanordnung nach Anspruch 13, wobei die Rohrschelle über eine Gewindestange mit dem Befestigungspunkt (16) des Gleitelements (14) verbunden ist.

15. Befestigungsanordnung eines Schiebegleiters (1) nach einem der Ansprüche 1 bis 12 an einer Montageschiene.
